# EUROPÄISCHE PATENTANMELDUNG

(11) **EP 0 522 401 A1**
(43) Veröffentlichungstag der Anmeldung: **13.01.1993**
(21) Anmeldenummer: 92110963.3
(22) Anmeldetag: 29.06.1992
(51) Int. Cl.: C03C 8/14, C23D 5/02

(54) **Emailschlicker, Verfahren zur Emaillierung von aluminium-beschichtetem Stahlblech sowie emailliertes Stahlblech**

(30) Priorität: 10.07.1991 DE 4122763
(71) Anmelder: Email Brügge N.V., B-8000 Brügge (BE)
(72) Erfinder: Preuss, Leo, Dipl.-Ing., B-8380 Zeebrugge (BE); Hoffmann, Hans, Dr., B-8000 Brugge (BE)
(74) Vertreter: Müller, Gerhard, Dr.

(57) **Zusammenfassung**

Die Erfindung betrifft ein Verfahren zur Emaillierung von aluminiumbeschichtetem Stahlblech, durch

a) Aufbringen eines Emailschlickers enthaltend
   I. mindestents eine niedrigschmelzende Emailfritte, die unterhalb 600°C in den Glasfluß übergeht,
   II. mindestens ein hochschmelzendes anorganisches oxidisches Pulver mit einer Schmelztemperatur oberhalb 900°C, die zumindest teilweise in dem geschmolzenden niedrigschmelzenden Email (I) unter Viskositätserhöhung lösbar ist, sowie
   III. mindestens eines Oxids der Metalle Eisen oder Kupfer,
b) Trocknen des Emailschlickers, und
c) Einbrennen bei 800 bis 850°C.

## Beschreibung

Die Emaillierung von Stahlblechen für unterschiedliche Einsatzbereiche mit Einbrenntemperaturen zwischen 780 und 950°C ist ebenso bekannt wie die Emaillierung von Aluminium mit Spezialemails für den Einbrennbereich zwischen 530 und 570°C, also deutlich unterhalb des Schmelzpunktes von Aluminium.

Auch die Emaillierung von feueraluminierten oder aluminium-plattierten Stahlblechen mit Produkten, die sich zur Emaillierung von Aluminium eignen und ebenfalls Einbrenntemperaturen von 560°C erfordern, ist bekannt. Für diesen Prozeß gilt, daß sich die Emailhaftung durch oberflächlich gebildete Fe-Al-Legierungen, die durch zu langes oder zu hohes Brennen entstanden sind, verschlechtern kann (D. Ziesche: Glas-Email-Keramo Technik 14 (1963), Seite 1). Die genannten Spezialemails für Aluminium, die auch für die Emaillierung von aluminiumbeschichteten Stahlblechen eingesetzt werden, erweichen beim Einbrand, ohne aber, wie z.B. Stahl- oder Gußemails, völlig glattzufließen. Dies ergibt eine starke Abhängigkeit der Oberflächenqualität vom Auftragsverfahren und damit teilweise sehr wellige Oberflächen. Aufgrund der niedrigen Einbrenntemperaturen für Aluminiumemails sind naturgemäß die erreichbaren chemischen und mechanischen Beständigkeiten der Oberflächen üblicher Aluminiumemaillierungen limitiert (W. Warnecke und H.-W. Birmes: Mitteilungen VDEfa 24 (1976) Seite 99 bis 102). Demgemäß ist die Verbreitung der Aluminiumemaillierung bzw. von emaillierten Stahlblechen im Vergleich zur Stahlblechemaillierung relativ bescheiden geblieben.

Eine Verarbeitung von Stahlblechemails mit guter Haftung auf aluminiertem oder aluminium-plattiertem Stahl schien nach dem Stand der Technik unmöglich, da die bekannten, auf elektrochemischer Korrosion der Stahloberfläche mittels Nickel- und/oder Kobaltverbindungen beruhenden Haftmechanismen durch die Aluminiumschicht blockiert werden und in der üblichen Weise nicht ablaufen können.

Es wurde nun gefunden, daß eine Emaillierung von aluminiumbeschichtetem Stahlblech bei Einbrenntemperaturen von 800 bis 850°C gelingt, wenn man eine bei niedriger Temperatur, d.h. ausreichend unterhalb der Schmelztemperatur von Aluminium in den Glasfluß übergehende Emailfritte einsetzt und gleichzeitig dafür sorgt, daß hochschmelzende anorganische oxidische Materialien vorhanden sind, die sich beim Einbrennen zumindest teilweise im Glasfluß unter Erhöhung von dessen Viskosität lösen, und ferner dafür Sorge trägt, daß die Emailhaftung aufgrund der sich ab 700°C bildenden intermetallischen Aluminium/Eisenphasen (Alitierung) nicht gestört wird. Dies gelingt durch weitere Zugabe von Oxiden des Kupfers und/oder des Eisens zum Emailschlicker.

Die auf diese Weise erhaltenen Emaillierungen sind als solche als dekorative Beschichtungen, aufgrund ihrer Rauhigkeit z.B. für Schultafeln oder als selbstreinigende Emailschichten hervorragend brauchbar.

Gegenstand der vorliegenden Erfindung ist demgemäß ein Verfahren zur Emaillierung von aluminiumbeschichtetem Stahlblech, das gekennzeichnet ist durch
a) Aufbringen eines Emailschlickers enthaltend
   I. mindestens eine niedrigschmelzende Emailfritte, die unterhalb 600°C in den Glasfluß übergeht,
   II. mindestens ein hochschmelzendes anorganisches oxidisches Pulver mit einer Schmelztemperatur von oberhalb 900°C, das zumindest teilweise in dem geschmolzenen niedrigschmelzenden Email (I) unter Viskositätserhöhung lösbar ist, sowie
   III. mindestens eines der Oxide des Kupfers oder Eisens,
b) Trocknen des Emailschlickers, und
c) Einbrennen bei 800 bis 850°C.

Gegenstand der vorliegenden Erfindung ist auch ein Emailschlicker der durch die oben unter a) genannten Bestandteile gekennzeichnet ist.

Das aufschmelzende anorganische oxidische Pulver soll vorzugsweise in einer Menge von 100 bis 200 Gew.-%, besonders bevorzugt in einer Menge von 120 bis 150 Gew.-% bezogen auf die Menge der niedrigschmelzenden Emailfritte vorhanden sein.

Als hochschmelze anorganische oxidische Pulver eignen sich insbesondere Pulver mit einem hohen Aluminiumoxid- und Siliziumdioxid-Gehalt wie Porzellanmehl oder Aluminiumsilikate wie Zeolithpulver. Andere geeignete hochschmelzende anorganische oxidische Pulver sind Zirkon (Zirkoniumsilikat), Titandioxid oder SiO₂, die in Kombination mit den genannten Aluminiumsilikaten vorteilhaft eingesetzt werden können.

Als niedrigschmelzende Emailfritten können die üblichen bekannten Aluminiumemails eingesetzt werden. Jedoch sind Aluminiumemails mit hohem Bleioxidgehalt weniger bevorzugt. Besonders bevorzugt werden Aluminiumemails mit hohem Vanadinpentoxidgehalt eingesetzt. Besonders bevorzugte niedrigschmelzende Emails weisen die folgende oxidische Zusammensetzung auf:
SiO₂; 30 bis 35 Gew.-%
Na₂O: 17 bis 23 Gew.-%
K₂O: 8 bis 14 Gew.-%
TiO₂: 18 bis 25 Gew.-%
V₂O₅: 7 bis 10 Gew.-%
Li₂O: 0,5 bis 2 Gew.-%
P₂O₅: 1 bis 2,5 Gew.-%
Al₂O₃: 0,5 bis 1,5 Gew.-%
Das im Emailschlicker ebenfalls einzusetzende Eisen- und/oder Kupferoxid soll erfindungsgemäß bevorzugt in einer Menge von 30 bis 70 Gew.-%, besonders bevorzugt 40 bis 60 Gew.-%, bezogen auf die Menge an niedrigschmelzender Emailfritte vorhanden sein.

Im übrigen enthält der Emailschlicker übliche Mahl-, Stell- und Schlickerhilfsmittel.

Die Schlickermischungen werden so vermahlen, daß sich bei Prüfung nach der Bayer-Methode (Lit.: Pöschmann: Email und Emailliertechnik, S. 146) mit einem Sieb einer Maschenweite von 40 µm (16.900 Maschen/m²) Mahlfeinheiten von 5 bis 10 ergeben.

Der erhaltene Emailschlicker kann nach üblichen Verfahren per Spritzauftrag oder elektrophoretisch aufgebracht werden.

Ist nur eine einfache Beschichtung beabsichtigt, kann das Auftragsgewicht nach dem Trocknen 400 bis 550 g/m² betragen.

Der Einbrand erfolgt in üblicher Weise bei einer Temperatur zwischen 800 und 850°C während einer Verweilzeit im Ofen zwischen 3 und 7 Minuten.

Der erfindungsgemäße Emailschlicker ist in gleicher Weise als Grundemailschlicker für die Zweischichtemaillierung geeignet, wobei als Deckemailschicht ein übliches Stahlblechemail, z.B. Titanweißemail oder Transparentemail mit Farbkörpern bzw. für die Stahlblechemaillierung entwickelte Spezialemails geeignet sind.

Im Falle des Einsatzes des erfindungsgemäßen Emailschlickers als Grundemail für die Zweischichtemaillierung wird der Emailschlicker vorzugsweise mit einem Trockenauftragsgewicht zwischen 50 bis 100 g/cm² aufgetragen.

Das erfindungsgemäße Verfahren zur Emaillierung von aluminiumbeschichtetem Stahlblech eignet sich sowohl für die 2-Schicht-2-Brand-Emaillierung als auch in vielen Fällen für die 2-Schicht-1-Brand-Verfahren.

Es wurde gefunden, daß der Auftrag des Kobalt- und Nickel-oxid-freien Schlickers auf unvorbehandeltes aluminiertes Stahlblech ohne Nachteil für die Emailhaftung erfolgen kann.

Bei Einsatz beidseitig aluminiumbeschichteter Stahlbleche, die nur einseitig emailliert werden, bildet sich beim Einbrennen auf der nicht-emaillierten Seite eine hoch korrosionsbeständige intermetallische Al/Fe-Schicht, insbesondere Al₃Fe-Schicht, aus, so daß eine Oberflächenbehandlung der nicht-emaillierten Rückseite des Stahlblechs unterbleiben kann, Ferner weisen die erfindungsgemäß emaillierten aluminiumbeschichteten Stahlbleche im Bereich der Schnittkanten gegenüber der herkömmlichen Stahlblechemaillierungen Vorteile im Korrosionsverhalten auf, da sich beim Schneiden oder Stanzen des Stahlblechs das Aluminium ganz oder teilweise über die Kanten zieht, so daß auch diese soweit sie nicht ebenfalls emailliert sind, durch die sich beim Einbrand bildende Al₃Fe-Schicht gegen Korrosion geschützt sind.

Durch den Einbrand bei Temperaturen von oberhalb 700°C wird die Aluminiumschicht durch Alitierung vollständig in intermetallische Aluminium-Eisen-Phasen umgewandelt, so daß auch im Falle der Beschädigung der Emailschicht durch Schlag oder Stoß der Stahl gegen Korrosion geschützt bleibt,

Durch die Erfindung wird demnach ein neuartiger Werkstoff zur Verfügung gestellt, der neben den Vorteilen üblicher Stahlblechemaillierung erhöhte Korrosionssicherheit auch für den Fall des Auftretens von Emallierfehlern oder Beschädigungen aufweist.

Gegenstand der vorliegenden Erfindung ist demnach auch ein emailliertes Stahlblech, daß durch eine aus intermetallischen Phasen des Systems Aluminium/Eisen bestehende Zwischenschicht und eine Emailschicht mit einem Erweichungspunkt von oberhalb 500°C gekennzeichnet ist.

Die Erfindung wird anhand der nachfolgenden Beispiele ohne Einschränkung der Allgemeinheit näher erläutert:

### Beispiele

### Beispiel 1

Teile aus handelsüblichem, al-plattiertem Stahl werden nach einer Entfettung einseitig durch Spritzauftrag mit einer haftvermittelnden Schicht versehen und anschließend getrocknet. Der zum Auftrag dieser Schicht benötigte Schlicker wird durch Vermahlung eines zur Emaillierung von Aluminium geeigneten Emails (A) der Zusammensetzung
33 Gew.-% SiO₂
20,5 Gew.-% Na₂O
12 Gew.-% K₂O
22 Gew.-% TiO₂
8,5 Gew.-% V₂O₅
1,5 Gew.-% Li₂O
1,5 Gew.-% P₂O₅
1 Gew.-% Al₂O₃
mit Zusatz nachfolgend angeführter Zuschlagstoffe in einer Kugelmühle vermahlen:

| | |
|---|---|
| Email A | 35 Teile |
| Porzellanmehl | 50 Teile |
| Eisenoxid | 15 Teile |
| Blauton | 5 Teile |
| Bentonit | 0,3 Teile |
| Mg-Silikathydrat (Bentone EW) | 0,3 Teile |
| Na-Carboxymethylcellulose | 0,2 Teile |
| Borsäure | 0,8 Teile |
| Wasser | 65,0 Teile |

Das spezifische Gewicht der Suspension wird auf d = 1,60 eingestellt, die Mahlfeinheit - gemessen nach der BAYER-Methode - soll etwa 7-10 (Sieb 16.900 Maschen/cm² ) betragen. Die Suspension wird dünn auf das Substrat aufgetragen - das Trockenauftragsgewicht beträgt 50 bis 100 g/m². Die nach dem Trocknen erhaltene Schicht wird 5 Minuten bei 820°C eingebrannt. Auf diese haftvermittelnde Schicht wird als Deckemail in üblicher Weise eine Weißemailsuspension - geeignet zur Beschichtung von grundierten Stahlplatten - aufgebracht. Als Weißemail eignet sich z.B. das Email (B):

| | |
|---|---|
| 38 - 47 % | SiO₂ |
| 14 - 20 % | TiO₂ |
| 14 - 18 % | B₂O₃ |
| 8 - 12 % | Na₂O |
| 3 - 6 % | K₂O |
| 0,5 - 1,5 % | Li₂O |
| 0 - 3,5 % | F₂ |
| 0,5 - 3 % | Al₂O₃ |
| 1 - 3 % | P₂O₅ |
| 0,5 - 1,5 % | MgO |

Das Email B wird zur Erzielung einer spritzfähigen Suspension mit Zusatz von Zuschlagstoffen in einer Kugelmühle vermahlen.

| | |
|---|---|
| Email B | 100 Teile |
| Blauton | 5 Teile |
| Bentonit | 0,3 Teile |
| Mg-Silikathydrat (Bentone EW) | 0,3 Teile |
| Na-Carboxymethylcellulose | 0,2 Teile |
| Wasser | 60 Teile |

Eventuell kann als Stellmittel noch 0,1 Teile Kaliumcarbonat angegeben werden. Das spezifische Gewicht der Suspension soll etwa 1,60 betragen, die Mahlfeinheit (nach BAYER) beträgt 5-7 (Sieb 16.900 M/cm²).

Nach Trocknung des Spritzauftrags erfolgt ein für Stahlblech-Weißemaile üblicher Einbrand (Verweilzeit im Ofen:
3 1/2 Minuten bei 820°C). Nach der Abkühlung ist vorderseitig eine fehlerfreie Weißemaillierung, rückseitig eine dunkelgraue, korrosionsbeständige Al₃Fe-Schicht entstanden,

### Beispiel 2

Wie Beispiel 1, jedoch beidseitige Emaillierung des Alplattierten Stahlblechs. Nach dem 2. Einbrand in der beschriebenen Weise ist eine beidseitig einwandfreie Weißemaillierung entstanden, die durch die zugrundeliegende Al₃Fe-Schicht eine besondere Korrosionssicherheit aufweist.

### Beispiel 3

Wie Beispiel 1 oder 2, mit dem Unterschied, daß das in der haftvermittelnden Schicht verwendete Eisenoxid durch Kupferoxid ersetzt wurde. Es entstehen qualitativ vergleichbare Emaillierungen.

### Beispiel 4

Wie Beispiele 1, 2 und 3 mit dem Unterschied, daß als Deckemallierung eine farbige, in diesem Falle eine durch einen Co-Oxid-Blaufarbkörper blau gefärbte Emaillierung erzeugt wird. Die Deckemailsuspension entsteht in diesem Fall durch Vermahlung eines Transparentemails (C) der oxidischen Zusammensetzung

| | |
|---|---|
| 48 - 57 % | SiO₂ |
| 12 - 16 % | Na₂O |
| 7 - 12 % | TiO₂ |
| 11 - 17 % | B₂O₃ |
| 1 - 6 % | K₂O |
| 0,5 - 2 % | Li₂O |
| 1 - 8 % | CaO |
| 2 - 5 % | F₂ |

mit Zuschlagstoffen entsprechend dem Mühlenversatz

| | |
|---|---|
| Email C | 100 Teile |
| Blauton | 5 Teile |
| Bentonit | 0,3 Teile |
| Mg-Silikathydrat (Bentone EW) | 0,3 Teile |
| Na-Carboxymethylcellulose | 0,2 Teile |
| Co-Oxid-Blaufarbkörper | 3 Teile |
| Wasser | 60 Teile |
| Mahlfeinheit 7-10 (16.900 M/cm²) | |

Der Einbrand der Deckemailschicht erfolgt bei 820°C (3.5 Min).

### Beispiel 5

Teile aus handelsüblichem, aluminiertem Stahl werden nach einer Entfettung mit einer dekorativen, matten Einschichtemaillierung versehen. Der hierfür verwendete Emailschlicker wird durch Vermahlung nachstehend angeführter Produkte in einer Kugelmühle hergestellt:

| | |
|---|---|
| Email A (wie Beispiel 1) | 35 Teile |
| Kupferoxid (CuO) | 20 Teile |
| Zeolith | 45 Teile |
| Blauton | 5 Teile |
| Bentonit | 0,3 Teile |
| Mg-Silikathydrat (Bentone EW) | 0,3 Teile |
| Na-Carboxymethylcellulose | 0,2 Teile |
| Borsäure | 0,8 Teile |
| Farbkörper Rutilgoldocker (Cr- und Sb-haltiger Rutil-FK) | 2 Teile |
| Wasser | 65 Teile |

Die Suspension (d = 1.60, Mahlfeinheit 7-10 16.900 M/cm² ) wird im Spritzauftrag aufgebracht. Nach einer Trocknung und Einbrand bei 830°C (5 Min) entsteht eine hellgrüne, matte, fehlerfreie Emaillierung. Die nicht emaillierte Rückseite ist von der schon in Beispiel 1 beschriebenen dunkelgrauen, korrosionsschützenden Al₂Fe-Schicht bedeckt.

### Beispiel 6

Werkstücke aus aluminiertem Stahl, die mit einer selbstreinigenden Schicht versehen werden sollen, werden durch Spritzauftrag, eventuell auch elektrophoretisch mit einer Suspension beschichtet, die durch Vermahlung nachstehender Komponenten in einer Kugelmühle entsteht:

| | |
|---|---|
| Email A (wie Beispiel 1) | 35 Teile |
| Porzellanmehl | 50 Teile |
| Eisenoxid (Fe₂O₃) | 15 Teile |
| Blauton | 5 Teile |
| Bentonit | 0,3 Teile |
| Mg-Silikathydrat (Bentone EW) | 0,3 Teile |
| Borsäure | 0,8 Teile |
| Na-Carboxymethylcellulose | 0,2 Teile |
| Wasser | 65 Teile |

Das Auftragsgewicht (trocken) beträgt 400 bis 550 g/m². Bei einem eventuell elektrophoretischen Auftrag kann auf die sonst übliche Zugabe von Na-Aluminatlösung verzichtet werden. Die Ausgangsleitfähigkeit des angegebenen Schlickers liegt über 10.000 Mikro-Siemens.

Nach Trocknung und Einbrand bei 820°C (5 Min) entsteht eine Schicht mit ausreichender Selbstreinigungswirkung - geeignet z.B. für Einschubteile in Grillgeräten (4-5 Zyklen nach ISO 8292).

### Beispiel 7

Eine Oberflächenbeschichtung mit einer gegenüber der im Beispiel 6 beschriebenen Schicht verbesserten Selbstreinigungswirkung läßt sich im Zweischicht/ein Brand-Verfahren erzeugen. In diesem Fall wird auf die in Beispiel 6 beschriebene 1. Schicht (Auftragsgewicht 50 bis 100 g/m² ) ohne Zwischenbrand eine zweite Schicht (Auftragsgewicht ca. 300 bis 400 g/m²) aufgebracht. Die hierfür benötigte Suspension wird durch Vermahlung nachstehend angeführter Komponenten in einer Kugelmühle erzeugt:

| | |
|---|---|
| Email D | 25 Teile |
| Porzellanmehl | 75 Teile |
| Blauton | 5 Teile |
| Mg-Silikathydrat (Bentone EW) | 0,3 Teile |
| Na-Carboxymethylcellulose | 0,2 Teile |
| Borsäure | 0,8 Teile |
| Wasser | 65 Teile |
| (d = 1.70; MF 10; M 16.900/cm² ) | |

Das Email D hat die Zusammensetzung:

| | |
|---|---|
| 70 - 77 % | SiO₂ |
| 10 - 15 % | Al₂O₃ |
| 3 - 6 % | Fe₂O₃ |
| 0,5 - 2 % | Li₂O |
| 4 - 7 % | P₂O₅ |
| 2 - 4 % | MnO |

Die beiden Schichten werden - nach einer gemeinsamen Trocknung bei 820°C 5 Min. gemeinsam eingebrannt. Es entsteht eine Emaillierung von hervorragender Selbstreinigung (8-10 Zyklen nach ISO 8292).

## Patentansprüche

1. Verfahren zur Emaillierung von aluminiumbeschichtetem Stahlblech, gekennzeichnet durch
a) Aufbringen eines Emailschlickers enthaltend
I. mindestens eine niedrigschmelzende Emailfritte, die unterhalb 600°C in den Glasfluß übergeht,
II. mindestens ein hochschmelzendes anorganisches oxidisches Pulver mit einer Schmelztemperatur oberhalb 900°C, die zumindest teilweise in dem geschmolzenen niedrigschmelzenden Email (I) unter Viskositätserhöhung lösbar ist, sowie
III. mindestens eines Oxids der Metalle Eisen oder Kupfer,
b) Trocknen des Emailschlickers, und
c) Einbrennen bei 800 bis 850°C.

2. Verfahren nach Anspruch 1, dadurch gekennzeichnet, daß der Emailschlicker das hochschmelzende anorganische oxidische Pulver in Mengen von 100 bis 200 Gew.-%, vorzugsweise 120 bis 150 Gew.-%, bezogen auf die niedrigschmelzende Emailfritte enthält.

3. Verfahren nach Anspruch 1 oder 2, dadurch gekennzeichnet, daß der Emailschlicker das Metalloxid in Mengen von 30 bis 70 Gew.-%, vorzugsweise 40 bis 60 Gew.-%, bezogen auf die niedrigschmelzende Emailfritte enthält.

4. Verfahren nach einem der Ansprüche 1 bis 3, dadurch gekennzeichnet, daß als niedrigschmelzende Emailfritte eine übliche Aluminiumemailfritte für Einbrenntemperaturen zwischen 530 und 560°C eingesetzt wird.

5. Verfahren nach einem der Ansprüche 1 bis 4, dadurch gekennzeichnet, daß als anorganisches oxidisches Pulver Porzellanmehl und/oder Zeolithpulver eingesetzt wird.

6. Verfahren nach einem der Ansprüche 1 bis 5, dadurch gekennzeichnet, daß zusätzlich ein übliches Stahlblechdeckemail entweder nach dem 2-Schicht-1-Brand- oder dem 2-Schicht-2-Brand-Verfahren aufgebracht wird.

7. Emailschlicker enthaltend wie a) in Anspruch 1.

8. Emailliertes Stahlblech gekennzeichnet durch eine aus intermetallischen Phasen des Systems Aluminium/Eisen bestehende Zwischenschicht und eine Emailschicht mit einem Erweichungspunkt von oberhalb 500°C.

## Patentansprüche (Patentansprüche für folgende(n) Vertragsstaat(en): ES)

1. Verfahren zur Emaillierung von aluminiumbeschichtetem Stahlblech, gekennzeichnet durch
a) Aufbringen eines Emailschlickers enthaltend
I. mindestens eine niedrigschmelzende Emailfritte, die unterhalb 600°C in den Glasfluß übergeht,
II. mindestens ein hochschmelzendes anorganisches oxidisches Pulver mit einer Schmelztemperatur oberhalb 900°C, die zumindest teilweise in dem geschmolzenen niedrigschmelzenden Email (I) unter Viskositatserhöhung lösbar ist, sowie
III. mindestens eines Oxids der Metalle Eisen oder Kupfer,
b) Trocknen des Emailschlickers, und
c) Einbrennen bei 800 bis 850°C.

2. Verfahren nach Anspruch 1, dadurch gekennzeichnet, daß der Emailschlicker das hochschmelzende anorganische oxidische Pulver in Mengen von 100 bis 200 Gew.-%, vorzugsweise 120 bis 150 Gew.-%, bezogen auf die niedrigschmelzende Emailfritte enthält.

3. Verfahren nach Anspruch 1 oder 2, dadurch gekennzeichnet, daß der Emailschlicker das Metalloxid in Mengen von 30 bis 70 Gew.-%, vorzugsweise 40 bis 60 Gew.-%, bezogen auf die niedrigschmelzende Emailfritte enthält.

4. Verfahren nach einem der Ansprüche 1 bis 3, dadurch gekennzeichnet, daß als niedrigschmelzende Emailfritte eine übliche Aluminiumemailfritte für Einbrenntemperaturen zwischen 530 und 560°C eingesetzt wird.

5. Verfahren nach einem der Ansprüche 1 bis 4, dadurch gekennzeichnet, daß als anorganisches oxidisches Pulver Porzellanmehl und/oder Zeolithpulver eingesetzt wird.

6. Verfahren nach einem der Ansprüche 1 bis 5, dadurch gekennzeichnet, daß zusätzlich ein übliches Stahlblechdeckemail entweder nach dem 2-Schicht-1-Brand- oder dem 2-Schicht-2-Brand-Verfahren aufgebracht wird.

7. Verfahren zur Herstellung von Emailschlickern, dadurch gekennzeichnet, daß der Emailschlicker
I. mindestens eine niedrigschmelzende Emailfritte, die unterhalb 600°C in den Glasfluß übergeht,
II. mindestens ein hochschmelzendes anorganisches oxidisches Pulver mit einer Schmelztemperatur oberhalb 900°C, die zumindest teilweise in dem geschmolzenen niedrigschmelzenden Email (I) unter Viskositätserhöhung lösbar ist, sowie
III. mindestens eines Oxids der Metalle Eisen oder Kupfer,
enthält.
